# EUROPÄISCHE PATENTSCHRIFT

(11) **EP 2 326 530 B1**
(45) Veröffentlichungstag und Bekanntmachung des Hinweises auf die Patenterteilung: **11.11.2015**
(21) Anmeldenummer: 09736375.8
(22) Anmeldetag: 23.09.2009
(51) Int. Cl.: B60N 2/015

(54) **VERRIEGELUNGSVORRICHTUNG FÜR EINEN FAHRZEUGSITZ**
LOCKING DEVICE FOR A VEHICLE SEAT
DISPOSITIF DE VERROUILLAGE D'UN SIÈGE AUTOMOBILE

(30) Priorität: 23.09.2008 DE 102008048411; 29.11.2008 DE 202008016018 U
(43) Veröffentlichungstag der Anmeldung: 01.06.2011
(73) Patentinhaber: Johnson Controls Components GmbH & Co. KG, 67657 Kaiserslautern (DE)
(72) Erfinder: HEEG, Norbert, 66994 Dahn (DE); DIEHL, Andreas, 67697 Otterberg (DE); DEIN, Markus, 71263 Weil der Stadt (DE)
(74) Vertreter: Liedtke, Markus
(86) Internationale Anmeldenummer: PCT/EP2009/006859
(87) Internationale Veröffentlichungsnummer: WO 2010/034474

(56) Entgegenhaltungen:
- EP-A2- 1 787 857
- DE-A1-102004 030 282
- DE-B3-102004 056 086
- US-A1- 2008 093 875

## Beschreibung

Die Erfindung betrifft eine Verriegelungsvorrichtung für einen Fahrzeugsitz, insbesondere für einen Kraftfahrzeugsitz, mit den Merkmalen des Oberbegriffs des Anspruches 1.

Aus der DE 10 2004 056 086 B3 ist eine Verriegelungsvorrichtung dieser Art mit zwei Sicherungselementen und einer elektrischen Abfragevorrichtung bekannt. Eine Feder, welche in Anlage an eines der Sicherungselemente kommen kann, dient als Signalgeber für einen Mikroschalter.

Die US 2008/093875 A1 offenbart eine Verriegelungsvorrichtung für einen Fahrzeugsitz mit einem Gehäuse, einer am Gehäuse beweglich gelagerten Klinke zum Verriegeln mit einem Gegenelement, wenigstens einem zum Sichern der Klinke im verriegelten Zustand vorgesehenen Sicherungselement, welches zum Entriegeln der Vorrichtung relativ zur Klinke beweglich ist, und einer den Verriegelungszustand der Verriegelungsvorrichtung abfragenden Abfragevorrichtung, welche einen Signalgeber und einen Sensor aufweist, wobei die Abfragevorrichtung berührungslos ausgebildet ist, und der Signalgeber und der Sensor aufgrund ihrer relativen Positionierung und/oder Bewegung zusammenwirken. Ferner ist an einer anderen Stelle eine zweite, mechanische Abfragevorrichtung mit einem weiteren Signalgeber und Sensor vorgesehen.

Der Erfindung liegt die Aufgabe zu Grunde, eine Verriegelungsvorrichtung der eingangs genannten Art zu verbessern. Diese Aufgabe wird erfindungsgemäß durch eine Verriegelungsvorrichtung mit den Merkmalen des Anspruches 1 gelöst. Vorteilhafte Ausgestaltungen sind Gegenstand der Unteransprüche.

Indem die Abfragevorrichtung berührungslos ausgebildet ist, wobei der Signalgeber und der Sensor aufgrund ihrer relativen Positionierung und/oder Bewegung zusammenwirken, also beispielsweise optisch oder magnetisch, entfallen die aufwendigen mechanischen Abfrageelemente. Zudem können relativ einfach mehrere Signalgeber mit dem gleichen Sensor zusammenwirken, indem die - zur eindeutigen Auswertung unterschiedlichen - Stärken und Charakteristiken der Signalgeber überlagert werden. Eine einfache Auswerteelektronik kann dann vorzugsweise drei Zustände unterscheiden, nämlich den verriegelten Zustand, den entriegelten Zustand und einen Missbrauchsfall, beispielsweise wenn die Verriegelungsvorrichtung ohne Gegenelement nur scheinbar verriegelt ist.

Die Signalgeber können aktive Elemente sein, die beispielsweise ein Feld erzeugen, das durch eine Bewegung der Signalgeber als Signal am Ort des Sensors wirkt. Die Signalgeber können aber auch passive Elemente sein, die durch Störung eines (beispielsweise von einem anderen Signalgeber erzeugten) Feldes am Ort des Sensors ein Signal erzeugen, beispielsweise das Feld schwächen oder ablenken.

Vorzugsweise sind die Signalgeber an den Sicherungselementen und der Sensor am Gehäuse vorgesehen, wobei auch die umgekehrte Anordnung möglich ist. Unterschiedliche Abstände der Signalgeber, beispielsweise zu einer Schwenkachse der Sicherungselemente und damit zum Sensor, oder unterschiedlich starke Signalgeber erzeugen die unterschiedlichen Stärken der Signalgeber am Ort des Sensors. Bei magnetischen Signalgebern sind auch unterschiedliche Ausrichtungen möglich. So kann eine ungefähr tangentiale Ausrichtung des Signalgebers zur Schwenkachse der Sicherungselemente einen Nulldurchgang der Ausgangsspannung des Sensors erzeugen. Wenn als Sicherungselemente ein Spannelement für den Normalfall und ein Fangelement für den Crashfall vorgesehen sind, die vorzugsweise auf Mitnahme gekoppelt sind, braucht nur eines der beiden einen Signalgeber oder einen Sensor aufweisen.

Die erfindungsgemäße Verriegelungsvorrichtung kann an verschiedenen Stellen eines Fahrzeugsitzes verwendet werden, beispielsweise zur Bodenanbindung des gesamten Fahrzeugsitzes oder als Lehnenschloss zur Befestigung der Lehne an der Fahrzeugstruktur. Von der Verriegelungsvorrichtung und dem Gegenelement ist eines an der Struktur des Sitzteiles (im Falle der Bodenanbindung) oder der Lehne (im Falle der Lehnenanbindung) und das andere an der Fahrzeugstruktur befestigt. Die Verriegelungsvorrichtung kann auch anderweitig im Fahrzeug eingesetzt werden.

Insbesondere bevorzugt ist die Verriegelungsvorrichtung in Verbindung mit einer Sensierung der Lehnenneigung, d.h. einer Lehnenneigungsabfragevorrichtung, und einer gemeinsamen Auswerteeinheit vorgesehen, so dass sicher Fehlfunktionen erkannt und aufgezeigt werden können.

Im Folgenden ist die Erfindung anhand eines in der Zeichnung dargestellten Ausführungsbeispiels sowie verschiedener spezieller Ausgestaltungsformen hiervon näher erläutert. Es zeigen
- Fig. 1: einen Schnitt durch das Ausführungsbeispiel im verriegelten Zustand mit angedeutetem Gegenelement,
- Fig. 2: einen Schnitt durch das Ausführungsbeispiel im entriegelten Zustand,
- Fig. 3: einen Schnitt entlang der Linie III-III in Fig. 1,
- Fig. 4: eine schematisierte Darstellung eines Fahrzeugsitzes,
- Fig. 5: eine Explosionsdarstellung der Abfragevorrichtung,
- Fig. 6: der Verlauf der Ausgangsspannung des Sensors in Abhängigkeit der Winkelstellungen der Sicherungselemente,
- Fig. 7: einen Schnitt durch den Verlauf der Ausgangsspannung des Sensors über einer Weglänge bzw. einer Winkelstellung der Sicherungselemente,
- Fig. 8: ein Blockschaltbild zur Verdeutlichung möglicher Eingangsparameter in die Auswerteelektronik sowie der Ausgänge von der Auswerteelektronik,
- Fig. 9: eine perspektivische Darstellung einer Verriegelungsvorrichtung mit einer Kugel zur Sensierung der Lehnenneigung im verriegelten Zustand,
- Fig. 10: eine schematisierte Darstellung der Sensoranordnung der Verriegelungsvorrichtung von Fig. 9,
- Fig. 11: eine perspektivische Darstellung einer Verriegelungsvorrichtung mit einer magnetisierbaren Flüssigkeit zur Sensierung der Lehnenneigung im verriegelten Zustand, und
- Fig. 12: eine perspektivische Darstellung einer Verriegelungsvorrichtung mit einer pendelartigen Anordnung zur Sensierung der Lehnenneigung im verriegelten Zustand.

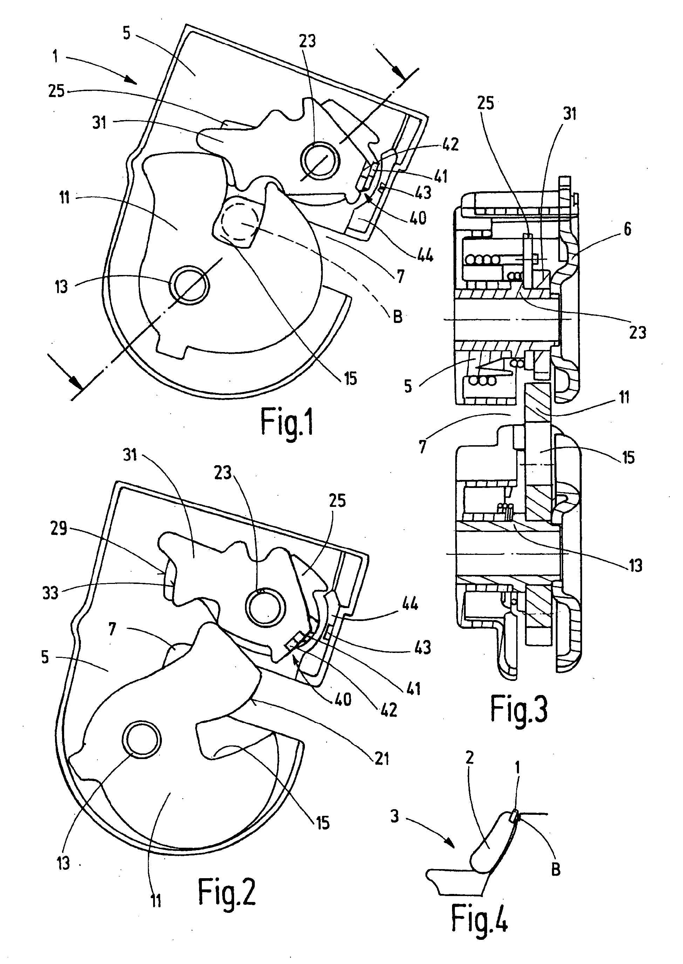

In einem Kraftfahrzeug ist eine Verriegelungsvorrichtung 1 zur Anbindung einer Lehne 2 eines Fahrzeugsitzes 3 an der Fahrzeugstruktur vorgesehen. Die Verriegelungsvorrichtung 1 (Fig. 1+2) weist ein halboffenes Gehäuse 5 mit einer näherungsweise ebenen Grundfläche und hochgezogenen Rändern auf. Die Grundfläche ist in der Regel in einer durch die Fahrtrichtung des Kraftfahrzeuges und durch die Vertikale definierten Ebene angeordnet, was die nachfolgend verwendeten Richtungsangaben definiert. Das Gehäuse 5 wird weitgehend geschlossen durch einen Deckel 6, welcher zur Grundfläche näherungsweise parallel am Gehäuse 5 anliegt und mit diesem verbunden ist (Fig. 3). Das Gehäuse 5 und/oder der Deckel können beispielsweise aus Metall oder aus Kunststoff, gegebenenfalls mit metallischen Einlegeteilen, ausgebildet sein. In abgewandelter Ausführung bildet ein Teil der Struktur des Fahrzeugsitzes 3 oder der Fahrzeugstruktur den Deckel 6.

Im Gehäuse 5 und im Deckel 6 ist eine Aufnahme 7 ausgebildet, welche sich in Richtung eines Gegenelementes B öffnet, um dieses zum Verriegeln aufzunehmen. Dabei ist von der Verriegelungsvorrichtung 1 und dem Gegenelement B eines an der Struktur der Lehne 2 und das andere an der Fahrzeugstruktur befestigt. Das Gegenelement B kann beispielsweise ein Bolzen oder ein Bügel sein. Der von der Aufnahme 7 aufzunehmende Abschnitt des Gegenelements B verläuft in der Regel horizontal. Die Richtung, in welcher das Gegenelement B von der Aufnahme 7 aufgenommen wird, sei als Einführrichtung bezeichnet. Die Abmessung der Aufnahme 7 senkrecht zur Einführrichtung (und in der Ebene der Grundfläche des Gehäuses 5) ist für einen Spielausgleich vorzugsweise größer als der entsprechende Durchmesser des Gegenelementes B.

Eine Klinke 11 ist auf einem ersten Lagerbolzen 13 schwenkbar gelagert, welcher wiederum am Gehäuse 5 (und am Deckel 6) befestigt ist und von dessen Grundfläche senkrecht absteht, d.h. horizontal verläuft. Der erste Lagerbolzen 13 ist vorzugsweise hohl ausgebildet, um ein Befestigungsmittel, beispielsweise eine Schraube, aufzunehmen, mittels dessen die Verriegelungsvorrichtung 1 bei der Montage an der zugeordneten Struktur befestigt wird. Die Klinke 11 weist zum Zusammenwirken mit dem Gegenelement B ein Hakenmaul 15 auf.

In der geschlossenen Stellung der Klinke 11 kreuzt das Hakenmaul 15 die Aufnahme 7 etwa senkrecht und öffnet sich seitlich zur Einführrichtung hin. Die dann in der Einführrichtung ausgerichtete Abmessung des Hakenmauls 15 ist geringfügig größer als der Durchmesser des Gegenelements B, wodurch das Gegenelement B im verriegelten Zustand der Verriegelungsvorrichtung 1 nicht an dem in Einführrichtung weiter innen gelegenen Rand des Hakenmauls 15 anliegt, sondern am Grund der Aufnahme 7 am Gehäuse 5. In der geöffneten Stellung der Klinke 11 öffnet sich das Hakenmaul 15 schräg zur Einführrichtung und kreuzt die Aufnahme 7 schräg. Das Hakenmaul15 ist so zum Einführen des Gegenelementes B bereit. Die Klinke 11 kann in Richtung der geöffneten Stellung vorgespannt sein.

Die Klinke 11 weist eine Funktionsfläche 21 auf, welche in der verriegelten Stellung näherungsweise in Richtung eines zweiten Lagerbolzens 23 weist, der parallel zum ersten Lagerbolzen 13 angeordnet und auf gleiche Weise am Gehäuse 5 (und am Deckel 6) befestigt ist. Die Funktionsfläche 21 ist beispielsweise kreisbogenförmig gekrümmt und konkav ausgebildet, kann aber auch eben sein. Auf dem zweiten Lagerbolzen 23 ist schwenkbar ein Spannelement 25 gelagert, welches zur Klinke 11 hin vorgespannt ist, insbesondere durch eine Feder. Im verriegelten Zustand übt im Normalfall das Spannelement 25 als Sicherungselement mittels einer exzentrisch zum zweiten Lagerbolzen 23 gekrümmte Spannfläche 29, welche sich in nicht-selbsthemmendem Kontakt mit der Funktionsfläche 21 befindet, ein schließendes Moment auf die Klinke 11 aus. Dadurch ist die Klinke 11 in dieser geschlossenen Stellung spielfrei. Die Spannfläche 29 ist beispielsweise kreisbogenförmig gekrümmt und konvex ausgebildet.

Ein Fangelement 31 ist axial (bezüglich des zweiten Lagerbolzens 23) neben dem Spannelement 25 auf der vom Gehäuse 5 abgewandten Seite angeordnet und ebenfalls schwenkbar auf dem zweiten Lagerbolzen 23 gelagert, also mit dem Spannelement 25 fluchtend um eine gemeinsame Schwenkachse gelagert. Das Fangelement 31 weist eine Fangfläche 33 auf, welche sich in Nachbarschaft zur Spannfläche 29 befindet, jedoch im verriegelten Zustand beabstandet zur Funktionsfläche 21 ist. Die Fangfläche 33 ist beispielsweise kreisbogenförmig gekrümmt und konvex ausgebildet, kann aber auch eben sein. Das Fangelement 31 kann in seinem Schwerpunkt gelagert sein. Das Fangelement 31 und das Spannelement 25 sind mit einem Leerweg auf Mitnahme gekoppelt, beispielsweise mittels einer Schlitz-Zapfen-Führung oder einem axial abstehenden Mitnehmer. Im Crashfall, wenn die Klinke 11 eventuell ein öffnendes Moment erfährt und das Spannelement 25 etwas wegdrückt, gelangt die Fangfläche 33 in selbsthemmende Anlage an die Funktionsfläche 21, ohne dass ein öffnendes Moment übertragen werden kann. So dient das Fangelement 31 der Abstützung der Klinke 11 und verhindert als weiteres Sicherungselement ein Öffnen derselben.

Im verriegelten Zustand der Verriegelungsvorrichtung 1 (Fig. 1) befindet sich das Gegenelement B in der Aufnahme 7 und im Hakenmaul 15 der geschlossenen Klinke 11, das Spannelement 25 sichert die Klinke 11 und das Fangelement 31 ist geringfügig von der Funktionsfläche 21 beabstandet. Um die Verriegelungsvorrichtung 1 zu entriegeln, sind die Sicherungselemente 25 und 31 von der Klinke 11 weg zu schwenken. Wird das Fangelement 31 geschwenkt, entfernt sich die Fangfläche 33 von der Funktionsfläche 21. Das schwenkende Fangelement 31 nimmt das Spannelement 25 mit, so dass die Klinke 11 nicht länger gesichert ist. Mitgenommen von einem der beiden Sicherungselemente oder durch eine eigene Vorspannung öffnet die Klinke 11. Aufgrund der Schwenkbewegung der Klinke 11 zieht sich das Hakenmaul 15 von der Aufnahme 7 zurück und gibt das Gegenelement B frei, welches sich entgegen der Einführrichtung relativ zur Verriegelungsvorrichtung 1 entfernt. Vorzugsweise liegen im entriegelten Zustand der Verriegelungsvorrichtung 1 die Klinke 11 und das Fangelement 31 zur gegenseitigen Stützung an einer jeweils von der Funktionsfläche 21 und der Fangfläche 33 verschiedenen Stelle aneinander an, so dass das Hakenmaul 15 aufnahmebereit bleibt.

Gelangt in diesem entriegelten Zustand (Fig. 2) das Gegenelement B wieder in die Aufnahme 7 und in Anlage an den Rand des Hakenmauls 15, vorliegend an dessen Funktionsfläche 21, so drückt das Gegenelement B die Klinke 11 in ihre geschlossene Stellung. Die Sicherungselemente 25 und 31 bewegen sich (aufgrund eigener Vorspannung oder Mitnahme durch das andere Sicherungselement) entlang der Funktionsfläche 21, in ihre Endpositionen, wodurch die beiden Sicherungselemente 25 und 31 wieder die Klinke 11 sichern. Die Verriegelungsvorrichtung 1 hat dann selbsttätig verriegelt.

Für Abfolge und zeitlichen Versatz der Schwenkbewegungen der Sicherungselemente 25 und 31 bestehen verschiedene Möglichkeiten. Bevorzugt ist, wenn das Gegenelement B die Klinke 11 in ihre geschlossene Stellung gedrückt hat, dass zunächst das Fangelement 31 in seine durch einen Anschlag definierte Endposition gelangt, in der eine crashsichere Verriegelung der Klinke 11 gegeben ist. Die gesamte Last, die im Gebrauch auftreten kann, wird über die Klinke 11 und Fangelement 31 abgestützt. Zeitlich versetzt fällt das Spannelement 25 ein, welches mittels seiner Spannfläche 29 die Klinke 11 (und damit die Verriegelungsvorrichtung 1) spielfrei (gegenüber dem Gegenelement B und der damit verbundenen Struktur). Ein Klappern ist damit ausgeschlossen.

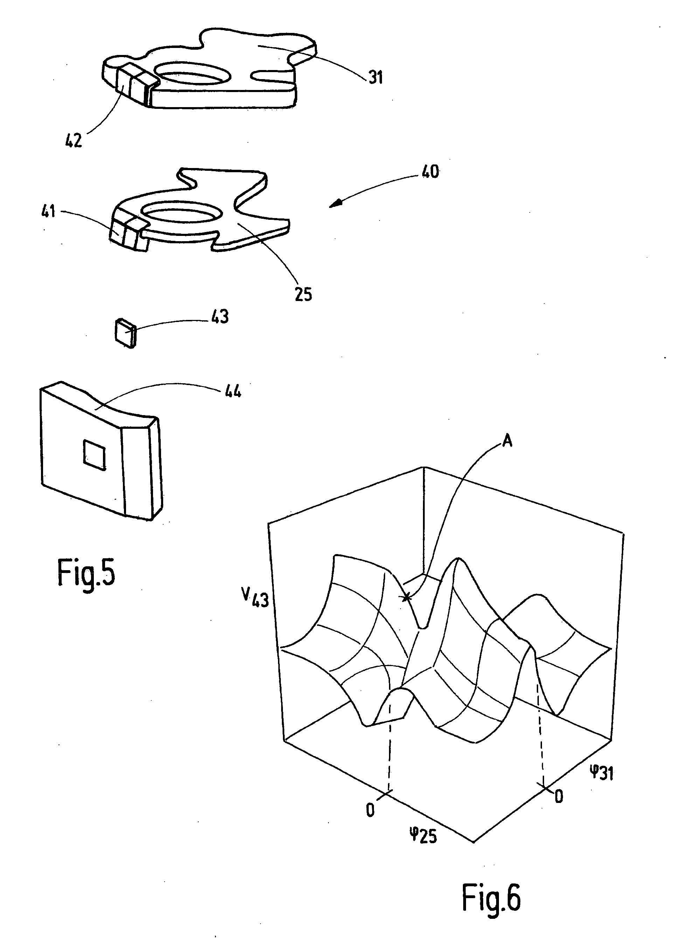

Um den Verriegelungszustand der Verriegelungsvorrichtung 1 abzufragen, weist die Verriegelungsvorrichtung 1 eine Abfragevorrichtung 40 auf (Fig. 5). Die Abfragevorrichtung 40 umfasst einen ersten Signalgeber 41, welcher am Spanneelement 25 angeordnet ist, einen zweiten Signalgeber 42, welcher am Fangelement 31 angeordnet ist, und wenigstens einen Sensor 43, welcher am Gehäuse 5 angeordnet ist. Die Abfragevorrichtung 40 ist berührungslos ausgebildet, d.h. die Signalgeber 41 und 42 und der Sensor 43 berühren sich nicht, sondern wirken aufgrund ihrer relativen Positionierung (gegebenenfalls einschließlich Ausrichtung) und/oder ihrer relativen Bewegung zusammen, insbesondere elektromagnetisch im weitesten Sinne.

Im Ausführungsbeispiel ist eine magnetische Abfragevorrichtung 40 vorgesehen, bei welcher die Signalgeber 41 und 42 Magnete und der Sensor 43 ein Hall-Sensor ist. Die relative Bewegung der Magnete zum Hall-Sensor erzeugt ein Signal im Hall-Sensor. Die Signalgeber 41 und 42 sind - bezüglich des zweiten Lagerbolzens 23 - gegenüberliegend zur Spannfläche 29 und zur Fangfläche 33 angeordnet, und zwar tangential zum zweiten Lagerbolzen 23 und mit entgegengesetzter Polung zueinander. Der Sensor 43 ist in der Nachbarschaft der beiden Signalgeber 41 und 42 angeordnet, vorliegend in einem Halter 44, der beispielsweise aus Kunststoff besteht.

Vorliegend ergibt sich in Abhängigkeit der Winkelstellungen ϕ₂₅ und ϕ₃₁ von Spannelement 25 und Fangelement 31 (bezüglich des zweiten Lagerbolzens 23) der Verlauf der Ausgangsspannung V₄₃ des Sensors 43 als eine von zwei Variablen abhängige Funktion in Form eines Potentialgebirges (Fig. 6). Die dem Sensor 43 nachgeschalteten Auswerteelektronik ermittelt aus dieser Ausgangsspannung V₄₃ des Sensors 43 wieder die Winkelstellungen ϕ₂₅ und ϕ₃₁.

Beim Schwenken eines dieser beiden Sicherungselemente 25 oder 31 von der maximal geöffneten Winkelstellung ϕ₂₅ oder ϕ₃₁ aus (entriegelter Zustand) schlägt die Ausgangsspannung V₄₃ des Sensors 43 zunächst in eine Richtung bis zu einem Maximalwert aus, kehrt sich dann mit einem Nulldurchgang um und erreicht dann wieder das ursprüngliche Niveau. Da die Winkelstellungen ϕ₂₅ oder ϕ₃₁ begrenzt sind, wird nicht das gesamte Potentialgebirge ausgenutzt.

Der beiden Signalgeber 41 und 42 sind in unterschiedlichem Abstand zur Schwenkachse der Sicherungselemente und damit unterschiedlicher minimaler Entfernung relativ zum Sensor 43 angeordnet, so dass die Ausschläge der Ausgangsspannung V₄₃ des Sensors 43 unterschiedlich groß ausfallen und den Rückschluss zulassen, welcher Signalgeber 41 oder 42 bewegt wurde. Der Arbeitspunkt A im Potentialgebirge für den verriegelten Zustand ist so gewählt, dass er im Bereich des ersten Ausschlages der Ausgangsspannung V₄₃ des Sensors 43 vor deren Maximalwert liegt.

Das Spannelement 25 kann gegenüber dem Fangelement 31 - abhängig von den vorliegenden Toleranzen - unterschiedliche Endpositionen einnehmen. Prinzipiell sind zwei Fälle zu unterscheiden, zum einen, dass das Spannelement 25 eingefallen ist und die Klinke 11 spielfrei gestellt ist, und zum anderen, dass das Spannelement 25 eingefallen ist und die Klinke 11 in ihre absolute Endposition gebracht hat. Der zweite Fall bedeutet, dass kein Gegenelement B vom Hakenmaul 15 aufgenommen worden ist (Missbrauchsfall mit scheinbar verriegeltem Zustand), da dann die Klinke 11 (mangels Anlage) weiter in Einführrichtung schwenkt als wenn ein Gegenelement B vom Hakenmaul 15 aufgenommen worden ist und die Schwenkbewegung der Klinke 11 begrenzt (verriegelter Zustand). Aufgrund der diesbezüglich unterschiedlichen Endposition der Klinke 11 endet auch das Schwenken des spielfreistellenden Spannelementes 25 und damit des ersten Signalgebers 41 bei unterschiedlichen Winkelstellungen ϕ₂₅. Dies führt - in der Überlagerung mit dem Magnetfeld des zweiten Signalgebers 42 - zu einer anderen Ausgangsspannung V₄₃ des Sensors 43, beispielsweise unterhalb eines Schwellwertes. Damit kann der Missbrauchsfall erkannt werden.

Zum Ausführungsbeispiel sind mehrere Abwandlungen möglich. So sind anstelle der entgegengesetzten Ausrichtung und tangentialen Anordnung der gleich ausgebildeten Signalgeber 41 und 42 an den Sicherungselementen 25 und 31 auch beliebig andere Ausrichtungen, Anordnungen oder Stärken (d. h. magnetische Flussdichten) möglich. Es kann auch der Effekt genutzt werden, dass die beiden Sicherungselemente auf Mitnahme gekoppelt sind. Nur eines der beiden Sicherungselemente 25 oder 31, vorzugsweise das Spannelement 25, trägt dann einen Signalgeber, um außer dem entriegelten Zustand und dem verriegelten Zustand auch den Missbrauchsfall mit dem scheinbar verriegelten Zustand zu erkennen.

Die gegenseitige Störung der Magnetfelder der beiden (gegenpolig oder gleichpolig angeordneten) Signalgeber 41 und 42 kann beispielsweise auch dahingehend weiterentwickelt werden, dass anstelle des einen Signalgebers ein (Weich-)Eisenstück vorgesehen ist, beispielsweise eine Nase am Spannelement 25, die das - vom Signalgeber am Fangelement 31 erzeugte - Magnetfeld am Ort des Sensors 43 in Abhängigkeit der Endposition des Spannelementes 25 unterschiedlich schwächt. So könnte das Eisenstück im Missbrauchsfall die Magnetfeldlinie derart ablenken, dass der Sensor 43 weniger mit Magnetfeldlinien durchsetzt wird und damit die Ausgangsspannung V₄₃ des Sensors 43 unterhalb eines Schwellwertes fällt.

Für eine optische Abfragevorrichtung 40 können beispielsweise die Signalgeber 41 und 42 Spiegel, die von einem Lichtstrahl beleuchtet werden, und der Sensor 43 eine Fotodiode sein. Die relativen Positionierungen, insbesondere die Winkel, mit denen die spiegelnden und empfangenden Flächen ausgerichtet sind, bestimmen, ob die Fotodiode ein Signal erhält. Es ist auch eine kapazitive Abfragevorrichtung 40 möglich, in der beispielsweise die Signalgeber 41 und 42 unterschiedliche Dielektrizitätskonstanten aufweisen.

Zur Erhöhung der Sicherheit und dem Schutz vor Fehlern sind gemäß einer Weiterentwicklung die Komponenten, welche den Zustand der Verriegelungsvorrichtung 5 sensieren, d.h. der Abfragevorrichtung 40, wie sie unter Bezugnahme auf die Figuren 1 bis 8 näher beschrieben sind, mit mindestens einem, vorzugsweise genau einem Lehnenneigungssensor 50, d.h. einer Lehnenneigungsabfragevorrichtung, gekoppelt, d.h. es wird sowohl der Zustand der Verriegelungsvorrichtung 5 als auch die Lehnenneigung sensiert. Für die Kontrollanzeige (nicht dargestellt), welche beispielsweise in die Instrumententafel integriert sein kann, wird im Falle einer Entriegelung der Verriegelungsvorrichtung 5 dieselbe angeschaltet. Wenn die Lehne anschließend abgeklappt wird, erlischt die Kontrollanzeige wieder, da man davon ausgehen kann, dass die geklappte Position durch den Insassen erzeugt wurde und gewünscht ist.

Im Folgenden wird die Erfindung dahingehend ergänzt, dass neben einer vorstehend beschriebenen Abfragevorrichtung 40 zum Ermitteln des Verriegelungszustands der Verriegelungsvorrichtung 1 auch eine Lehnenneigungsabfragevorrichtung mit mindestens einem Lehnenneigungssensor 50 vorgesehen ist, welcher sowohl innerhalb des Gehäuses 5 der Verriegelungsvorrichtung 1 als auch an anderer Stelle innerhalb der Lehne nahe dem Lehnendrehpunkt angeordnet sein kann.

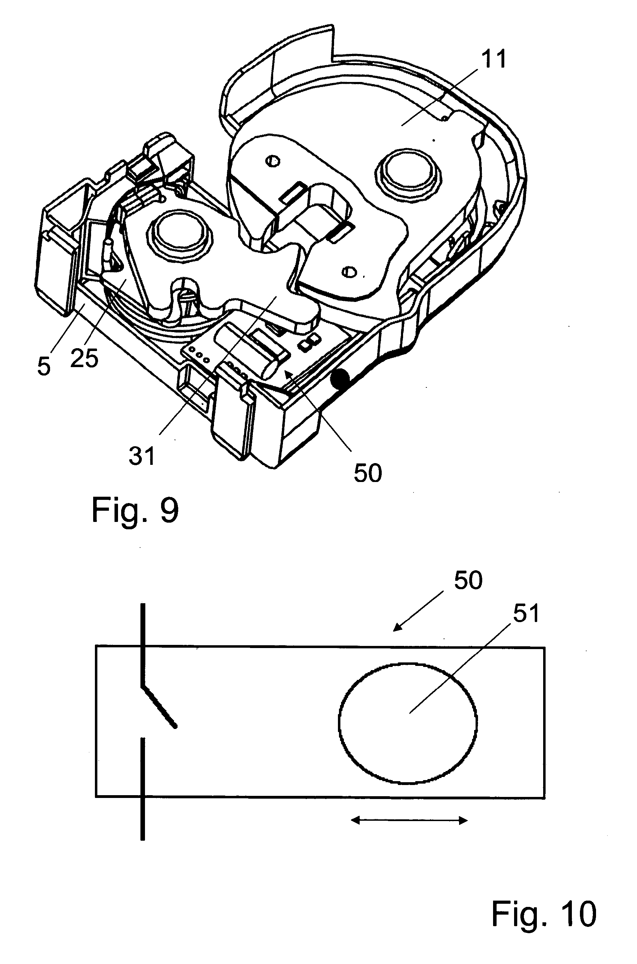

Im Folgenden wird auf Grund der vorteilhafteren Ausgestaltung ausschließlich auf einen Lehnenneigungssensor 50 eingegangen, welcher direkt im Gehäuse 5 für die Verriegelungsvorrichtung 1 integriert ist, wobei in den Figuren 9, 11 und 12 drei verschiedene Ausführungsformen von getrennt ausgebildeten Lehnenneigungssensoren beispielhaft dargestellt sind. In der Zeichnung wurden zum einfacheren Verständnis durchgehend die gleichen Bezugszeichen für gleiche bzw. gleichwirkende Elemente verwendet.

Die Komponenten "Sensor Verriegelungszustand", "Sensor Lehnenneigung" und "Signalzusammenführung und -auswertung" sind bei der unter Bezugnahme auf die Figuren 1 bis 6 beschriebenen Ausführungsform in einer einzigen Sensoreinheit (mit Geber und Empfänger) und einer in die Sensoreinheit integrierten Auswerteeinheit zusammengefasst, wobei innerhalb der Sensoreinheit mehrere Geber (erster und zweiter Signalgeber 41 bzw. 42 für den Verriegelungszustand und ein Signalgeber für die Lehnenneigung (nicht dargestellt) vorgesehen sein können, um die unterschiedlichen Zustände zu ermitteln, und die Auswerteeinheit die Signale des Empfängers direkt aufbereitet, so dass eine Information an den Insassen weitergegeben werden kann, beispielsweise mittels einer Kontrollanzeige und/oder einem Signalton. Ferner kann die Anzeige auch "vor Ort" erfolgen, z.B. durch ein LED-Element, welches am Gehäuse 5 angebracht und von außen gut sichtbar ist, wie durch den großen schwarzen Punkt in den Figuren 9, 11 und 12 unten rechts angedeutet.

Eine derartige Vorrichtung mit Verriegelungsvorrichtung 1 und Lehnenneigungssensorik umfasst die folgenden drei Bestandteile: Sensierung Verriegelungsvorrichtung, Sensierung Lehnenneigung und Zusammenfassung der Informationen in der Auswerteeinheit.

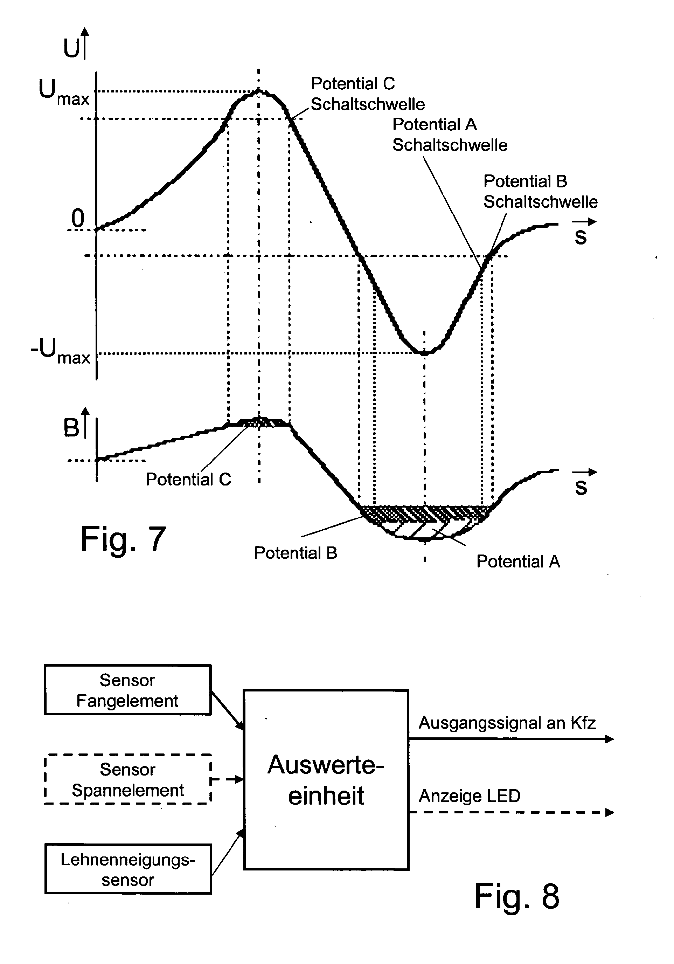

Bei Betrieb ermittelt hierbei in einem ersten Schritt die Sensoreinheit, im vorliegenden Fall ein Hall-Sensor, welcher sich relativ zu einem Magnetfeld bewegt, die Position des Fangelements 31, wobei das Fangelement 31 mit dem zweiten Signalgeber 42 (siehe Fig. 1) ausgestattet ist, welcher relativ zum Empfänger (Sensor 43) positioniert ist. Hierbei erzeugt der zweite Signalgeber 42 im Empfänger in der verriegelten Stellung ein Potential A (siehe schematische Darstellung von Fig. 7), d.h. das Potential A entspricht der verriegelten Stellung. Wird - gemäß einer optionalen Ausführungsform - das Spannelement 25 abgefragt, so kann durch eine definierte Änderung des Potentials vom Potential A auf das Potential B die Auswerteeinheit ermitteln, dass eine Fehlverriegelung vorliegt (z.B. eine Verriegelung ohne Bolzen bzw. Gegenelement B). Diese Abfrage des Spannelements 25 kann durch einen zusätzlichen Signalgeber (erster Signalgeber 41 von Fig. 1, der auf dem Spanneelement 25 montiert ist, oder durch eine spezielle geometrische Form des Spanneelements 25) erfolgen. In beiden Fällen wird das Erregerfeld des Signalgebers auf dem Fangelement 31 derart verändert, dass das Potential B erreicht wird.

Im zweiten Schritt wird die Lehnenneigung ermittelt, wofür vorliegend der gleiche Empfänger, d.h. der Sensor 43, oder gemäß den Ausführungsformen der Figuren 9, 11 und 12 ein separater Lehnenneigungssensor 50 verwendet wird, auf welchen an späterer Stelle kurz eingegangen wird. Beim dritten Signalgeber (nicht in den Figuren 1 bis 8 dargestellt), handelt es sich wiederum um einen Magnet, welcher den Empfänger derart beeinflusst, dass dieser auf ein Potential C schaltet.

Wie aus der Darstellung von Fig. 7 ersichtlich ist, entsprechen die Grenzen der Potentiale A, B, C jeweils bestimmten Spannungen, so dass durch eine einfache Spannungsmessung die Potentiale ermittelt werden können.

Die Auswerteeinheit, welche die Informationen, d.h. vorliegend die Spannungswerte, sammelt, schaltet bei einem Verlassen des Potentials A, d.h. bei einer Überschreitung der Grenzspannung hiervon (in Fig. 7 mit "Potential A Schaltwert" bezeichnet), die Anzeige an, um den entriegelten Zustand anzuzeigen. Die Anzeige wird bei einem ordnungsgemäßen Verlauf, bei welchem das Potential C am Ende erreicht wird, d.h. bei einer Überschreitung der Grenzspannung hiervon (in Fig. 7 mit "Potential C Schaltwert" bezeichnet), wieder ausgeschaltet. Im Falle einer Fehlfunktion, d.h. wenn das Potential C nicht erreicht wird, bleibt die Anzeige zur Warnung angeschaltet.

Die Funktion der Auswerteeinheit ist in Fig. 8 schematisch dargestellt. Hierbei werden die Daten von Fangelementsensor (und optional Spannelementsensor) sowie dem Lehnenneigungssensor in der Auswerteeinheit, üblicherweise eine spezielle Auswerteelektronik, ausgewertet und das Ergebnis als Ausgangssignal an ein Kfz-Steuergerät weitergegeben, welches eine Anzeige im Armaturenbrett ansteuert und/oder optional direkt an eine optische Anzeige, wie eine LED-Anzeige im Bereich des Kofferraums, weitergegeben werden. Hierbei sind Folgende Zustände möglich:
Lehne aufrecht, verriegelt (Potential A)
Lehne aufrecht, nicht verriegelt
Lehne umgelegt (Potential C)
sowie optional (falls Spannelementsensor vorhanden):
Lehne aufrecht, fehlverriegelt (Potential B)

Natürlich kann bei entsprechenden Anforderungen an das System und an die Genauigkeit der Ermittlung auch ein elektronischer Winkelgeber zur Ermittlung der Lehnenneigung vorgesehen sein.

Im Folgenden werden kurz beispielhaft mögliche Ausführungsformen des Lehnenneigungssensors 50 erwähnt.

Der Lehnenneigungssensor 50 gemäß der Ausführungsform von Fig. 9 und 10 wird durch eine Kugel in Verbindung mit einem Schalter gebildet, wobei die Kugel bei einer Veränderung der Lehnenneigung ihre Position verändert. Wird die Lehne vorgeschwenkt, so gelangt sie im vorliegenden Fall in Anlage an einen Schalter und schließt einen Stromkreis. Wird die Lehne wieder zurückgeschwenkt, wird der Schalter in Folge des Zurückrollens der Kugel automatisch wieder geöffnet. Somit wirkt die Kugel als ein dritter Signalgeber 51.

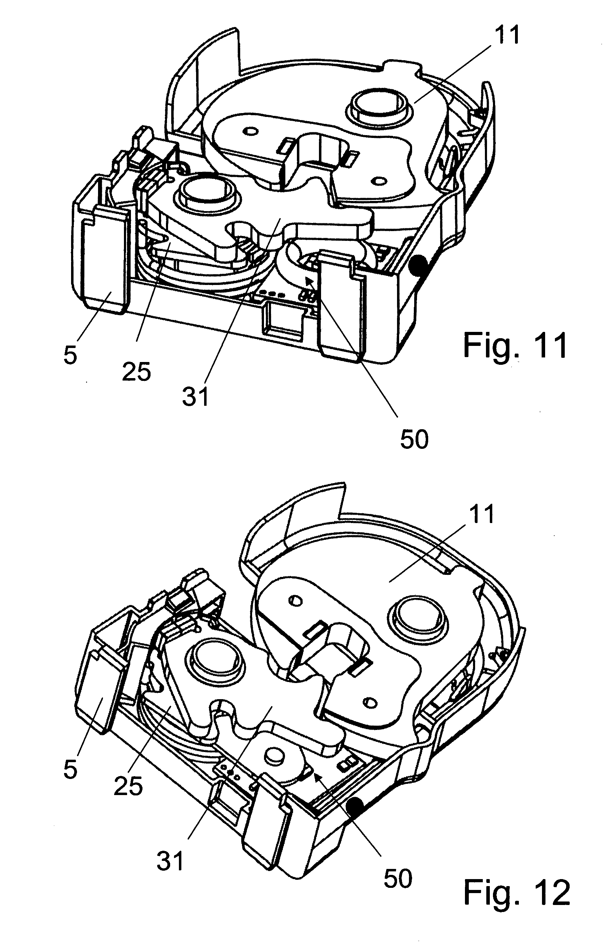

Gemäß der in Fig. 11 dargestellten Ausführungsform ist eine magnetisierbare Flüssigkeit vorgesehen, welche in Folge einer Positionsänderung innerhalb eines dieselbe aufnehmenden Behälters zu einer Veränderung eines Magnetfelds im Falle einer Positionsänderung der Lehne führt. Hierbei wirkt die magnetisierbare Flüssigkeit als dritter Signalgeber.

Als dritte Ausführungsform ist in Fig. 12 eine Art Pendelanordnung vorgesehen, welche die Sensierung der Lehnenstellung ermöglicht. Hierbei wirkt vorliegend eine drehbare Scheibe mit einem Magnet als drittem Signalgeber, welcher infolge der Schwerkraft stets in gleicher Position angeordnet ist, mit einem Sensor zusammen, wobei durch eine Veränderung der Lehnenneigung sich die relative Position von Magnet und Sensor verändert, so dass eine Positionsänderung der Lehne ermittelt werden kann.

In allen Fällen wird eine Positionsänderung der Lehne der Auswerteeinheit weitergeleitet, welche die Messdaten entsprechend auswertet und gegebenenfalls eine Warnung des Insassen veranlasst.

### Bezugszeichenliste

- 1: Verriegelungsvorrichtung
- 2: Lehne
- 3: Fahrzeugsitz
- 5: Gehäuse
- 6: Deckel
- 7: Aufnahme
- 11: Klinke
- 13: erster Lagerbolzen
- 15: Hakenmaul
- 21: Funktionsfläche
- 23: zweiter Lagerbolzen
- 25: Spannelement
- 29: Spannfläche
- 31: Fangelement
- 33: Fangfläche
- 40: Abfragevorrichtung
- 41: erster Signalgeber
- 42: zweiter Signalgeber
- 43: Sensor
- 44: Halter
- 50: Lehnenneigungssensor
- 51: dritter Signalgeber
- A: Arbeitspunkt
- B: Gegenelement
- V₄₃: Ausgangsspannung des Sensors
- ϕ₂₅: Winkelstellung des Spannelementes
- ϕ₃₁: Winkelstellung des Fangelementes

## Patentansprüche

1. Verriegelungsvorrichtung für einen Fahrzeugsitz, insbesondere für einen Kraftfahrzeugsitz, mit einem Gehäuse (5), einer am Gehäuse (5) beweglich gelagerten Klinke (11) zum Verriegeln mit einem Gegenelement (B), wenigstens einem zum Sichern der Klinke (11) im verriegelten Zustand vorgesehenen Sicherungselement (25, 31), welches zum Entriegeln der Verriegelungsvorrichtung (1) relativ zur Klinke (11) beweglich ist, und einer den Verriegelungszustand der Verriegelungsvorrichtung (1) abfragenden Abfragevorrichtung (40), welche wenigstens einen Signalgeber (41, 42) und wenigstens einen Sensor (43) aufweist, wobei die Abfragevorrichtung (40) berührungslos ausgebildet ist, und der Signalgeber (41, 42) und der Sensor (43) aufgrund ihrer relativen Positionierung und/oder Bewegung zusammenwirken, **dadurch gekennzeichnet, dass** als Sicherungselemente ein Spannelement (25), welches im Normalfall ein schließendes Moment auf die Klinke (11) ausübt, und ein Fangelement (31), welches im Crashfall die Klinke (11) abstützt, vorgesehen sind, wobei mit der Abfragevorrichtung (40) ein verriegelter Zustand, ein entriegelter Zustand und ein Missbrauchsfall abzufragen ist, wobei sich im Missbrauchsfall die Verriegelungsvorrichtung (1) ohne Gegenelement (B) in einem scheinbar verriegelten Zustand befindet.

2. Verriegelungsvorrichtung nach Anspruch 1, **dadurch gekennzeichnet, dass** das Sicherungselement (25, 31) schwenkbar gelagert ist.

3. Verriegelungsvorrichtung nach Anspruch 1 oder 2, **dadurch gekennzeichnet, dass** der Signalgeber (41, 42) am Sicherungselement (25, 31) und der Sensor (43) am Gehäuse (5) vorgesehen ist.

4. Verriegelungsvorrichtung nach einem der vorhergehenden Ansprüche, **dadurch gekennzeichnet, dass** als Signalgeber (41, 42) ein Magnet und als Sensor (43) ein Hall-Sensor vorgesehen ist.

5. Verriegelungsvorrichtung nach Anspruch 2 und 3 und 4, **dadurch gekennzeichnet, dass** der Signalgeber (41, 42) mit seiner Polung tangential zur Schwenkachse des Sicherungselementes (25, 31) ausgerichtet ist.

6. Verriegelungsvorrichtung nach einem der vorhergehenden Ansprüche, **dadurch gekennzeichnet, dass** genau eines der Sicherungselemente (25, 31) den Signalgeber (41, 42) aufweist.

7. Verriegelungsvorrichtung nach Anspruch 6, **dadurch gekennzeichnet, dass** das andere Sicherungselement (25, 31) ein passives Element aufweist, welches das Feld des Signalgebers (41, 42) stört.

8. Verriegelungsvorrichtung nach einem der vorhergehenden Ansprüche, **dadurch gekennzeichnet, dass** jedes der beiden als Spannelement (25) und Fangelement (31) ausgebildeten Sicherungselemente (25, 31) je einen Signalgeber (41, 42) aufweist.

9. Verriegelungsvorrichtung nach Anspruch 8, **dadurch gekennzeichnet, dass** die beiden Signalgeber (41, 42) unterschiedliche Ausrichtungen und/oder einen unterschiedlichen Abstand zur gemeinsamen Schwenkachse der beiden Sicherungselemente (25, 31) und/oder unterschiedlichen minimalen Abstand zum Sensor (43) und/oder unterschiedliche Stärken der von ihnen erzeugten Felder aufweisen.

10. Verriegelungsvorrichtung nach einem der vorhergehenden Ansprüche, **dadurch gekennzeichnet, dass** neben dem mindestens einen Signalgeber (41, 42) der Abfragevorrichtung (40) zum Ermitteln des Verriegelungszustands auch mindestens ein Signalgeber (51) einer Lehnenneigungsabfragevorrichtung zum Ermitteln der Lehnenneigung vorgesehen ist, wobei die Signalgeber (41, 42, 51) mit mindestens einem Sensor (43, 50) zusammenwirken.

11. Verriegelungsvorrichtung nach Anspruch 10, **dadurch gekennzeichnet, dass** eine gemeinsame Auswerteeinheit für alle Sensoren (43, 50) vorgesehen ist.

12. Verriegelungsvorrichtung nach Anspruch 10 oder 11, **dadurch gekennzeichnet, dass** der oder die Signalgeber (41, 42) der Abfragevorrichtung (40) zum Ermitteln des Verriegelungszustands und der oder die Signalgeber (51) der Lehnenneigungabfragevorrichtung mit einem gemeinsamen Sensor zusammenwirken.

13. Verriegelungsvorrichtung nach einem der Ansprüche 10 bis 12, **dadurch gekennzeichnet, dass** alle Signalgeber (41, 42, 51) und Sensoren (43, 50) zum Ermitteln des Verriegelungszustands bzw. zum Ermitteln der Lehnenneigung im Gehäuse (5) integriert sind.

14. Fahrzeugsitz mit wenigstens einer Verriegelungsvorrichtung (1) nach einem der vorhergehenden Ansprüche.

## Claims

1. Locking device for a vehicle seat, in particular for a motor vehicle seat, having a housing (5), a pawl (11) which is movably mounted on the housing (5) and has the purpose of locking with an opposing element (B), at least one securing element (25, 31) which is provided for securing the pawl (11) in the locked state and is movable relative to the pawl (11) in order to unlock the locking device (1), and an interrogation device (40) which interrogates the locking state of the locking device (1) and which has at least one signal generator (41, 42) and at least one sensor (43), wherein the interrogation device (40) is embodied in a contactless fashion, and the signal generator (41, 42) and the sensor (43) interact on the basis of their relative positioning and/or movement, **characterized in that** a clamping element (25), which in the normal case applies a closing torque to the pawl (11), and a detent element (31), which supports the pawl (11) in the event of a crash, are provided as securing elements, wherein a locked state, an unlocked state and a case of misuse can be interrogated with the interrogation device (40), wherein in the case of misuse the locking device (1) is in an apparently locked state without the opposing element (B).

2. Locking device according to Claim 1, **characterized in that** the securing element (25, 31) is pivotably mounted.

3. Locking device according to Claim 1 or 2, **characterized in that** the signal generator (41, 42) is provided on the securing element (25, 31), and the sensor (43) is provided on the housing (5).

4. Locking device according to one of the preceding claims, **characterized in that** a magnet is provided as the signal generator (41, 42), and a Hall sensor is provided as the sensor (43).

5. Locking device according to Claim 2 and 3 and 4, **characterized in that** the signal generator (41, 42) is oriented with its polarity tangentially with respect to the pivoting axis of the securing element (35, 31).

6. Locking device according to one of the preceding claims, **characterized in that** precisely one of the securing elements (25, 31) has the signal generator (41, 42).

7. Locking device according to Claim 6, **characterized in that** the other securing element (25, 31) has a passive element which disrupts the field of the signal generator (41, 42).

8. Locking device according to one of the preceding claims, **characterized in that** each of the two securing elements (25, 31) which are embodied as a clamping element (25) and detent element (31) has a signal generator (41, 42).

9. Locking device according to Claim 8, **characterized in that** the two signal generators (41, 42) have different orientations and/or a different distance from the common pivoting axis of the two securing elements (25, 31) and/or a different minimum distance from the sensor (43) and/or different strengths of the fields generated by them.

10. Locking device according to one of the preceding claims, **characterized in that**, in addition to the at least one signal generator (41, 42) of the interrogation device (40) for determining the locking state, at least one signal generator (51) of a backrest inclination-interrogation device is also provided for determining the backrest inclination, wherein the signal generators (41, 42, 51) interact with at least one sensor (43, 50).

11. Locking device according to Claim 10, **characterized in that** a common evaluation unit is provided for all the sensors (43, 50).

12. Locking device according to Claim 10 or 11, **characterized in that** the signal generator or generators (41, 42) of the interrogation device (40) for determining the locking state and the signal generator or generators (51) of the backrest inclination-interrogation device interact with a common sensor.

13. Locking device according to one of Claims 10 to 12, **characterized in that** all the signal generators (41, 42, 51) and sensors (43, 50) for determining the locking state or for determining the backrest inclination are integrated in the housing (5).

14. Vehicle seat having at least one locking device (1) according to one of the preceding claims.

## Revendications

1. Dispositif de verrouillage pour un siège de véhicule, en particulier pour un siège de véhicule automobile, avec un boîtier (5), un cliquet (11) monté de façon mobile sur le boîtier (5) pour le verrouillage avec un contre-élément (B), au moins un élément de blocage (25, 31) prévu pour le blocage du cliquet (11) dans l'état verrouillé, qui est mobile par rapport au cliquet (11) pour déverrouiller le dispositif de verrouillage (1), et un dispositif d'interrogation (40) demandant l'état de verrouillage du dispositif de verrouillage (1), qui présente au moins un émetteur de signal (41, 42) et au moins un capteur (43), dans lequel le dispositif d'interrogation (40) est réalisé sans contact, et l'émetteur de signal (41, 42) et le capteur (43) coopèrent en raison de leur positionnement et/ou de leur mouvement relatif, **caractérisé en ce qu'**il est prévu comme éléments de blocage un élément de serrage (25), qui exerce dans un cas normal un couple de fermeture sur le cliquet (11), et un élément de capture (31), qui en cas de collision soutient le cliquet (11), le dispositif d'interrogation (40) étant en mesure de demander un état verrouillé, un état déverrouillé et une situation d'utilisation abusive, le dispositif de verrouillage (1) se trouvant, en cas d'utilisation abusive, sans contre-élément (B) dans un état apparemment verrouillé.

2. Dispositif de verrouillage selon la revendication 1, **caractérisé en ce que** l'élément de blocage (25, 31) est monté de façon pivotante.

3. Dispositif de verrouillage selon la revendication 1 ou 2, **caractérisé en ce que** l'émetteur de signal (41, 42) est prévu sur l'élément de blocage (25, 31) et le capteur (43) est prévu sur le boîtier (5).

4. Dispositif de verrouillage selon l'une quelconque des revendications précédentes, **caractérisé en ce qu'**il est prévu comme émetteur de signal (41, 42) un aimant et comme capteur (43) un capteur de Hall.

5. Dispositif de verrouillage selon les revendications 2, 3 et 4, **caractérisé en ce que** l'émetteur de signal (41, 42) est orienté avec sa polarité tangentiellement à l'axe de pivotement de l'élément de blocage (25, 31).

6. Dispositif de verrouillage selon l'une quelconque des revendications précédentes, **caractérisé en ce qu'**exactement un des éléments de blocage (25, 31) présente l'émetteur de signal (41, 42).

7. Dispositif de verrouillage selon la revendication 6, **caractérisé en ce que** l'autre élément de blocage (25, 31) présente un élément passif, qui perturbe le champ de l'émetteur de signal (41, 42).

8. Dispositif de verrouillage selon l'une quelconque des revendications précédentes, **caractérisé en ce que** chacun des deux éléments de blocage (25, 31) configurés en tant qu'élément de serrage (25) et élément de capture (31) présente respectivement un émetteur de signal (41, 42).

9. Dispositif de verrouillage selon la revendication 8, **caractérisé en ce que** les deux émetteurs de signal (41, 42) présentent des orientations différentes et/ou une distance différente par rapport à l'axe de pivotement commun des deux éléments de blocage (25, 31) et/ou une distance minimale différente par rapport au capteur (43) et/ou des intensités différentes des champs qu'ils produisent.

10. Dispositif de verrouillage selon l'une quelconque des revendications précédentes, **caractérisé en ce qu'**en plus dudit au moins un émetteur de signal (41, 42) du dispositif d'interrogation (40) pour déterminer l'état de verrouillage, il est également prévu au moins un émetteur de signal (51) d'un dispositif d'interrogation de l'inclinaison du dossier pour déterminer l'inclinaison du dossier, dans lequel les émetteurs de signal (41, 42, 51) coopèrent avec au moins un capteur (43, 50).

11. Dispositif de verrouillage selon la revendication 10, **caractérisé en ce qu'**il est prévu une unité d'exploitation commune pour tous les capteurs (43, 50).

12. Dispositif de verrouillage selon la revendication 10 ou 11, **caractérisé en ce que** le ou les émetteur(s) de signal (41, 42) du dispositif d'interrogation (40) pour la détermination de l'état de verrouillage et le ou les émetteur (s) de signal (51) du dispositif d'interrogation de l'inclinaison du dossier coopèrent avec un capteur commun.

13. Dispositif de verrouillage selon l'une quelconque des revendications 10 à 12, **caractérisé en ce que** tous les émetteurs de signal (41, 42, 51) et tous les capteurs (43, 50) pour la détermination de l'état de verrouillage ou pour la détermination de l'inclinaison du dossier sont intégrés dans le boîtier (5).

14. Siège de véhicule avec au moins un dispositif de verrouillage (1) selon l'une quelconque des revendications précédentes.
